# EUROPÄISCHE PATENTANMELDUNG

(11) **EP 2 848 971 A2**
(43) Veröffentlichungstag der Anmeldung: **18.03.2015**
(21) Anmeldenummer: 14002605.5
(22) Anmeldetag: 25.07.2014
(51) Int. Cl.: G02B 6/44

(54) **Kennzeichnungs- und Verschlussbauteil für Micropipes**

(30) Priorität: 13.09.2013 DE 102013015213
(71) Anmelder: Langmatz GmbH, 82467 Garmisch-Partenkirchen (DE)
(72) Erfinder: Resch, Hans-Jörg, 82491 Grainau (DE); Bauer, Hubert, 82467 Garmisch-Partenkirchen (DE); Wulf, Stephan, 82467 Garmisch-Partenkirchen (DE)
(74) Vertreter: Flosdorff, Jürgen

(57) **Zusammenfassung**

Das Kennzeichnungs- und Verschlussbauteil für Micropipes, die Glasfaser-Kabel aufnehmen, ist gekennzeichnet durch einen plattenförmigen Abschnitt mit einem zu beschriftenden Kennzeichnungsfeld, eine Dichtkappe, die auf einen Endabschnitt eines Micropipe an diesem dicht anliegend aufsetzbar ist, und einen Befestigungsabschnitt zum Befestigen des Kennzeichnungs- und Verschlussbauteils an einem Micropipe, wobei die Dichtkappe und der Befestigungsabschnitt mit gegenüber liegenden Enden des plattenförmigen Abschnitts verbunden sind.

## Beschreibung

Die Erfindung betrifft ein Kennzeichnungs- und Verschlussbauteil für Micropipes, die Glasfaser-Kabel aufnehmen. Derartige Micropipes, die auch Speednet-Rohre genannt werden, werden in der Erde verlegt und verlaufen beispielsweise zu Glasfaser-Netzverteilerschränken. Zu einem späteren Zeitpunkt werden Glasfaser-Kabel in die Micropipes eingeblasen, die in dem Netzverteiler gespleißt und von dort den einzelnen Empfängern zugeführt werden. Damit die Glasfaser-Kabel bzw. die darin befindlichen Glasfasern den einzelnen Bestimmungsorten zugeführt werden können, werden die Micropipes mit einer Kennzeichnung versehen. Außerdem soll sicher gestellt sein, dass in die Micropipes keine Fremdkörper eintreten, die das spätere Einblasen der Glasfaser-Kabel erschweren oder unmöglich machen könnten, weshalb die Micropipes provisorisch verschlossen werden.

Der vorliegenden Erfindung liegt die Aufgabe zugrunde, eine kostengünstige Lösung für das obige Problem anzugeben, die zudem die Montagearbeiten in einem Glasfaser-Netzverteiler erleichtern soll.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht ein Kennzeichnungs- und Verschlussbauteil für Micropipes vor, das einen ebenen, plattenförmigen Teil, der mit einer Kennzeichnung beschriftet oder z.B. beklebt werden kann, eine Dichtkappe, die auf das freie Ende eines Micropipe aufsetzbar ist und dieses dicht umschließt, so dass die Dichtkappe auf dem Endabschnitt des Micropipe sicher gehalten ist, und einen Befestigungsabschnitt zum Befestigen des Kennzeichnungs- und Verschlussbauteils an dem Micropipe aufweist. Dabei sind Dichtkappe und Befestigungsabschnitt mit gegenüber liegenden Enden des plattenförmigen Kennzeichnungsabschnitts verbunden und halten diesen sicher an dem zugehörigen Micropipe, so dass dieses bei Montagearbeiten sicher identifizierbar ist.

Mit großem Vorteil wird vorgeschlagen, dass der plattenförmige Kennzeichnungsabschnitt, die Dichtkappe und der Befestigungsabschnitt einstückig ausgebildet sind. Bevorzugt ist hierzu das Spritzgussverfahren, wobei ein geeignetes Material Polypropylen ist, ohne dass die Erfindung hierauf beschränkt ist.

Außerdem wird mit großem Vorteil vorgeschlagen, dass die Dichtkappe und/oder der Befestigungsabschnitt, bevorzugt beide, über Filmscharniere mit dem plattenförmigen Abschnitt verbunden sind. Diese ermöglicht es, dass der Befestigungsabschnitt, der plattenförmige Kennzeichnungsabschnitt und die Bodenfläche der Dichtkappe im Ausgangszustand des Kennzeichnungs- und Verschlussbauteils in einer Ebene liegen. Dies erleichtert ein Beschriften des plattenförmigen Kennzeichnungsabschnitts erheblich, da das gesamte Bauteil hierzu flach auf einen Untergrund gelegt werden kann, bevor die Filmscharniere gebogen werden, um den Befestigungsabschnitt und die Dichtkappe an dem Micropipe zu befestigen.

In weiteren Einzelheiten der Erfindung wird vorgeschlagen, dass der Befestigungsabschnitt ein mit dem zugehörigen Filmscharnier verbundener Ring ist, dessen Innendurchmesser größer ist als der Außendurchmesser des Micropipe. Zum Befestigen des Kennzeichnungs- und Verschlussbauteils wird der Ring über das Micropipe geführt, woraufhin die Dichtkappe auf das Micropipe aufgesetzt wird. Dies erfolgt - wie oben erwähnt - zweckmäßigerweise nach der Beschriftung bzw. Kennzeichnung des mittigen plattenförmigen Abschnitts des Kennzeichnungs- und Verschlussbauteils.

Außerdem wird mit großem Vorteil vorgeschlagen, dass die Dichtkappe mehrere zylindrische Wandabschnitte aufweist, deren Durchmesser zum freien Ende der Dichtkappe hin jeweils kleiner wird, wobei das freie Ende durch einen Wandabschnitt geschlossen ist. Die Durchmesser der zylindrischen bzw. ringförmigen Wandabschnitte sind auf die am Markt befindlichen Außendurchmesser der Micropipes abgestimmt, so dass die Dichtkappe stets dicht anliegend auf das jeweils verwendete Micropipe aufgesetzt werden kann. Die gängigen Durchmesser der Micropipes bzw. Speednet-Rohre sind 5, 7, 10 und 12 mm, so dass die Dichtkappe vier ringförmige Wandabschnitte aufweisen kann, deren Innendurchmesser im wesentlichen mit den vorstehend genannten Durchmesserwerten übereinstimmen. Die Erfindung ist hierauf jedoch nicht beschränkt, sondern die Dichtkappe kann mehr oder weniger zylindrische Wandabschnitte unterschiedlicher Durchmesser aufweisen.

Die abgestuften ringförmigen Wandabschnitte können kreisförmig oder z.B. auch oval sein oder eine andere geeignete Querschnittsform haben.

Da die Dichtkappe in dem auf das Micropipe aufgesetzten Zustand dessen Ende verschließt, können keine Fremdpartikel in dieses eintreten.

Wenn zu einem späteren Zeitpunkt Glasfaser-Kabel in die Micropipes eingeblasen werden sollen, wird der über das Micropipe hinaus vorstehende Teil der Dichtkappe abgetrennt bzw. abgeschnitten, wobei der verbleibende vorderste ringförmige Wandabschnitt die Dichtkappe sicher auf dem Micropipe hält. Auf einen über die verbleibende Dichtkappe hinaus vorstehenden Endabschnitt des Micropipe kann dann ein gasdichter Verschluss aufgesetzt werden, der nicht Gegenstand der vorliegenden Erfindung ist.

Weitere Einzelheiten der Erfindung ergeben sich aus der nachfolgenden Beschreibung einer bevorzugten Ausführungsform des Kennzeichnungs- und Verschlussbauteils sowie anhand der Zeichnungen. Dabei zeigen:

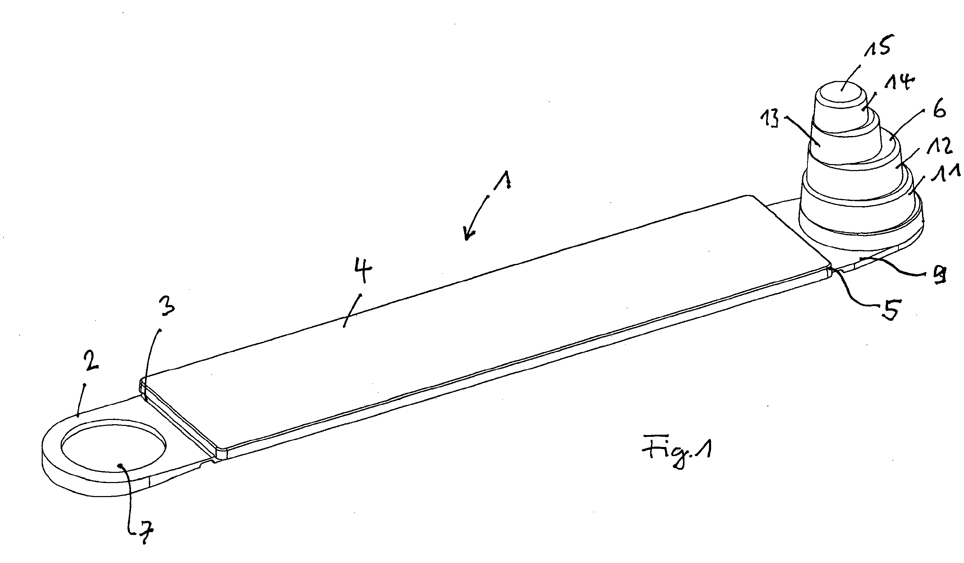

- Figur 1: eine perspektivische Ansicht einer Ausführungsform des Kennzeichnungs- und Verschlussbauteils in dem Ausgangszustand;

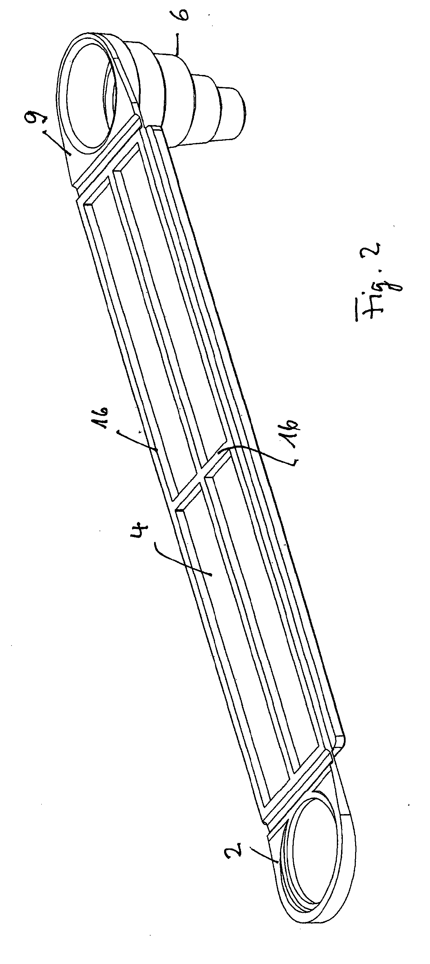

- Figur 2: das Bauteil der Figur 1 in einer Ansicht der Unterseite;

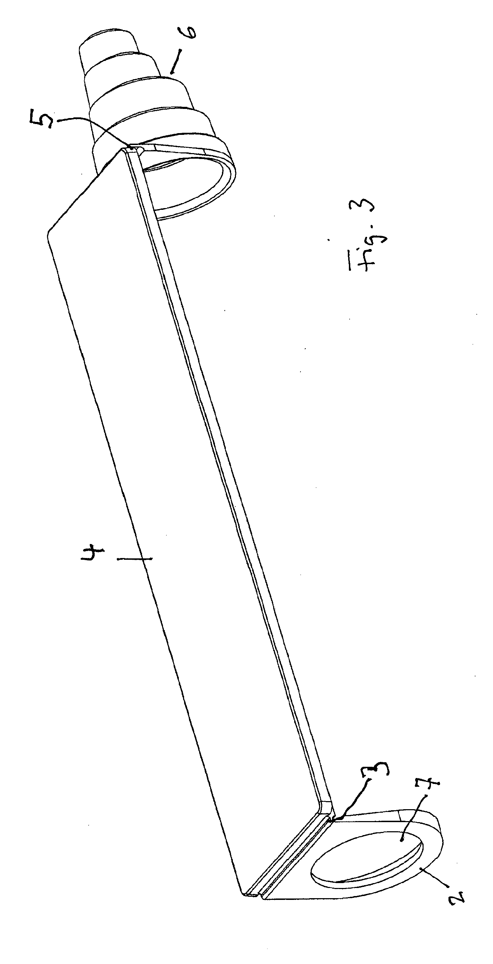

- Figur 3: das Bauteil mit abgebogener Dichtkappe und abgebogenen Befestigungsabschnitt;

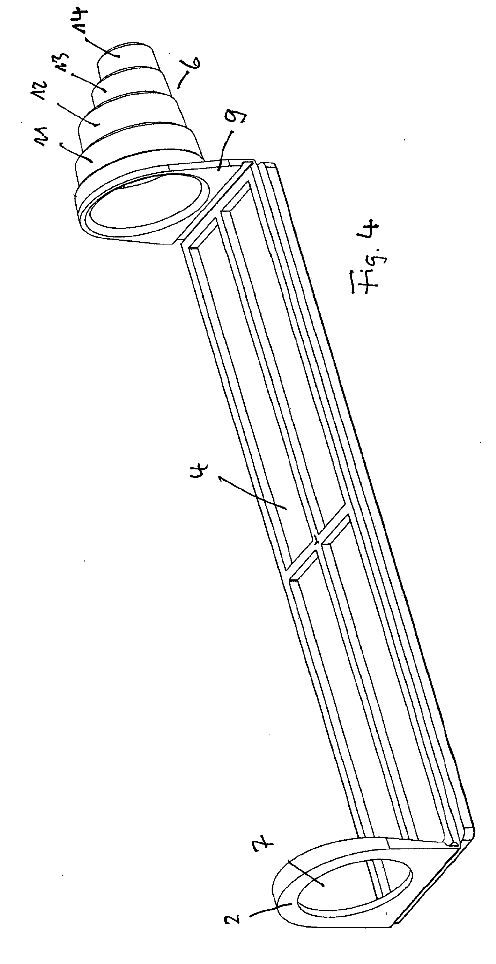

- Figur 4: eine Ansicht der Unterseite des Bauteils gemäß Figur 3;
- Figur 5: das Bauteil in dem auf ein Micropipe aufgeschobenen Zustand, teilweise in einer Schnittdarstellung;
- Figur 6: die Anordnung gemäß Figur 5 in einer perspektivischen Ansicht;

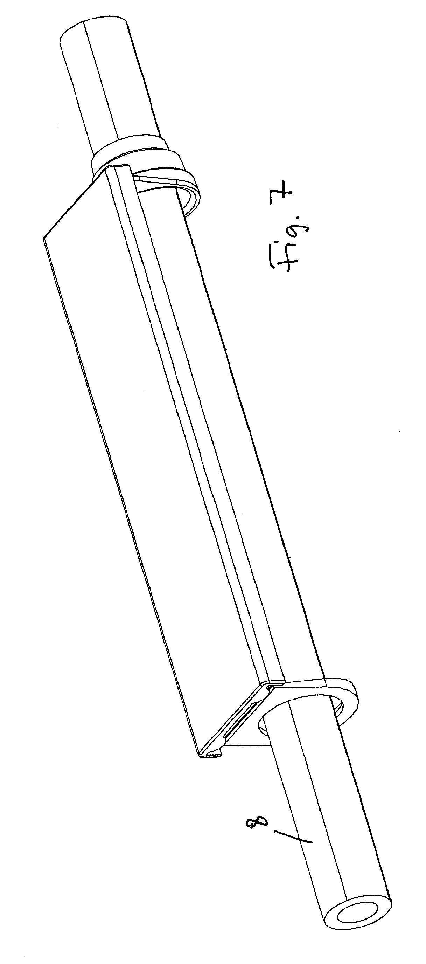

- Figur 7: die Ansicht mit abgeschnittener Dichtkappe und hindurchgeführtem Bauteil.

Das Kennzeichnungs- und Verschlussbauteil 1 besteht aus einem Befestigungsabschnitt 2, der über ein Filmscharnier 3 mit einem langgestreckten, rechteckigen Abschnitt 4 verbunden ist, der wiederum an der gegenüberliegenden Schmalseite über ein Filmscharnier 5 mit einer Dichtkappe 6 verbunden ist. Der Befestigungsabschnitt 2 hat ein kreisrundes Loch 7 mit einem Innendurchmesser, der größer ist als der Außendurchmesser eines Micropipe 8. Der plattenförmige Abschnitt 4 hat ein glattes, ebenes Kennzeichnungsfeld, das zur Identifizierung des zugehörigen Micropipe 8 beschriftet oder mit einer Kennzeichnung beklebt werden kann.

Die Dichtkappe 6 enthält auf einer Basis 9 vier miteinander verbundene, übereinander angeordnete zylindrische Wandabschnitte 11, 12, 13 und 14, deren Innendurchmesser von der Basis 9 aus stufenweise kleiner wird. Der oberste zylindrische Wandabschnitt 14 ist durch eine Wand 15 oben verschlossen.

Die Unterseite des Befestigungsabschnitts 2, des plattenförmigen Abschnitts 4 und der Basis 9 der Dichtkappe 6 liegen in dem aus einer Spritzgussform entnommenen Zustand im wesentlichen in einer Ebene, wobei die Unterseite des plattenförmigen Abschnitts 4 durch Rippen 16 verstärkt ist. Diese in einer Ebene liegende Anordnung ermöglicht es, dass ein Monteur das Kennzeichnungs- und Verschlussbauteil zum Beschriften des Kennzeichnungsfelds auf einen ebenen Untergrund legen kann, so dass die Oberseite des plattenförmigen Abschnitts bequem beschriftet werden kann.

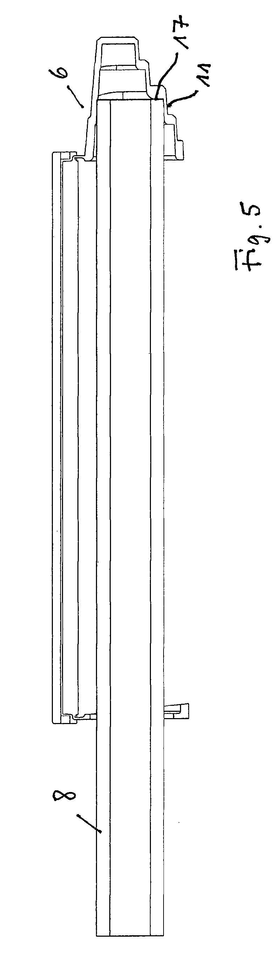

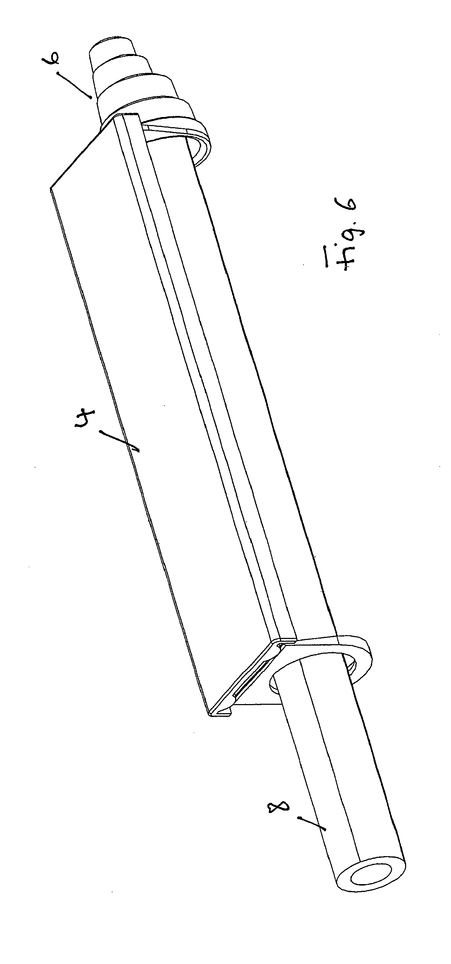

Da der Befestigungsabschnitt 2 und die Dichtkappe 6 bzw. deren Basis 9 jeweils über ein Filmscharnier 3, 5 miteinander verbunden sind, können diese Teile rechtwinklig umgebogen werden, um ein Micropipe 8 durch das Loch 7 hindurch und in das hohle Innere der Dichtkappe 6 einzuführen, wie dies die Figuren 5 und 6 zeigen.

Da die Innendurchmesser der zylindrischen Wandabschnitte 11 bis 14 auf die gängigen Außendurchmesser der Micropipes 8 abgestimmt sind, läßt sich das Micropipe 8 soweit in die Dichtkappe 6 einführen, bis es an eine radiale Übergangswand 17 zu einem zylindrischen Wandabschnitt kleineren Durchmessers anstößt. In diesem Zustand liegt das Micropipe 8 (in der Darstellung der Figur 5) an der Innenwand des zylindrischen Wandabschnitts 11 dicht an. Damit dichtet die Dichtkappe 6 das Micropipe 8 staubdicht ab.

Wenn zu einem späteren Zeitpunkt nicht dargestellte Glasfaserkabel in das Mikropipe 8 eingeblasen werden sollen, wird der Teil der Dichtkappe 6 abgeschnitten, dessen Innendurchmesser kleiner ist als der Außendurchmesser des Mikropipe 8. Das Mikropipe 8 kann dann durch das Kennzeichnungs- und Verschlussbauteil 1 vorgeschoben werden, so dass der Endabschnitt des Micropipe 8 nach dem Durchblasen der Glasfaser-Kabel durch einen nicht dargestellten Gasstopp druckdicht verschlossen werden kann.

## Patentansprüche

1. Kennzeichnungs- und Verschlussbauteil für Micropipes, die Glasfaser-Kabel aufnehmen,
**gekennzeichnet durch**
einen plattenförmigen Abschnitt (4) mit einem zu beschriftenden Kennzeichnungsfeld,
eine Dichtkappe (6), die auf einen Endabschnitt eines Micropipe (8) an diesem dicht anliegend aufsetzbar ist und
einen Befestigungsabschnitt (2) zum Befestigen des Kennzeichnungs- und Verschlussbauteils (1) an einem Micropipe (8), wobei die Dichtkappe (6) und der Befestigungsabschnitt (2) mit gegenüber liegenden Enden des plattenförmigen Abschnitts (4) verbunden sind.

2. Kennzeichnungs- und Verschlussbauteil für Micropipes nach Anspruch 1,
**dadurch gekennzeichnet,**
**dass** der plattenförmige Abschnitt (4), die Dichtkappe (6) und der Befestigungsabschnitt (2) einstückig ausgebildet sind.

3. Kennzeichnungs- und Verschlussbauteil für Micropipes nach den Ansprüchen 1 oder 2,
**dadurch gekennzeichnet,**
**dass** die Dichtkappe (6) und/oder der Befestigungsabschnitt (2) über Filmscharnier(e) (3, 5) mit dem plattenförmigen Abschnitt (4) verbunden sind.

4. Kennzeichnungs- und Verschlussbauteil für Micropipes nach den Ansprüchen 1 bis 3,
**dadurch gekennzeichnet,**
**dass** der Befestigungsabschnitt (2), der plattenförmige Abschnitt (4) und die Bodenfläche (9) der Dichtkappe (6) im Ausgangszustand in einer Ebene liegen.

5. Kennzeichnungs- und Verschlussbauteil für Micropipes nach den Ansprüchen 1 bis 4,
**dadurch gekennzeichnet,**
**dass** der Befestigungsabschnitt (2) eine Ringform hat, deren Innendurchmesser größer ist als der Außendurchmesser des Micropipe (8).

6. Kennzeichnungs- und Verschlussbauteil für Micropipes nach den Ansprüchen 1 bis 5,
**dadurch gekennzeichnet,**
**dass** die Dichtkappe (6) mehrere zylindrische Wandabschnitte (11-14) aufweist, deren Durchmesser zum freien Ende der Dichtkappe (6) hin jeweils kleiner wird, wobei das freie Ende geschlossen ist.

7. Kennzeichnungs- und Verschlussbauteil für Micropipes nach den Ansprüchen 1 bis 6,
**dadurch gekennzeichnet,**
**dass** die Dichtkappe (6) im aufgesetzten Zustand das Micropipe (8) staubdicht verschließt.
